(19) **Europäisches Patentamt**
**European Patent Office**
**Office européen des brevets**

(11) **EP 4 628 605 A1**

(12) **EUROPEAN PATENT APPLICATION**
published in accordance with Art. 153(4) EPC

(43) Date of publication:
**08.10.2025 Bulletin 2025/41**

(51) International Patent Classification (IPC):
*C22B 1/16* (2006.01)      *C10L 5/44* (2006.01)

(21) Application number: **23897274.9**

(52) Cooperative Patent Classification (CPC):
**C10L 5/44; C22B 1/16**

(22) Date of filing: **16.10.2023**

(86) International application number:
**PCT/JP2023/037317**

(87) International publication number:
**WO 2024/116616 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.11.2022 JP 2022189295**

(71) Applicant: **NIPPON STEEL CORPORATION
Chiyoda-ku
Tokyo 100-8071 (JP)**

(72) Inventor: **YABE Hideaki
Tokyo 100-8071 (JP)**

(74) Representative: **Vossius & Partner
Patentanwälte Rechtsanwälte mbB
Siebertstrasse 3
81675 München (DE)**

(54) **SINTERED ORE MANUFACTURING METHOD**

(57)    Sintering materials include: a crushed product of a compression-molded product obtained by crushing the compression-molded product (S112) obtained by compressing and molding an aggregate of carbonized wood; and at least one of coke breeze or anthracite, and the compression-molded product has an envelope density of 0.6 g/cm$^3$ or more.

# FIG.3

STAGE FOR OBTAINING CARBONIZED-WOOD COMPRESSION-MOLDED PRODUCT → CRUSHING STEP → TO MATERIAL TANK

S111        S112

## Description

TECHNICAL FIELD

The present invention relates to a method for producing sintered ore used as a material in a blast furnace.

BACKGROUND ART

In order to reduce $CO_2$ emissions as a measure against global warming, it is extremely important to change a typical coal-derived aggregation material to biomass char, which is a carbon-neutral carbonaceous material. The following techniques are disclosed with regard to methods of producing sintered ore using biomass char (biochar).

The sintering method described in Patent Literature 1 involves use of sintering materials to produce sintered ore with a downward suction sintering machine, the sintering materials containing: carbonized biomass of 0.1 to 9.0 mass%, which contains nitrogen of less than 2.3 mass%-dry and sulfur of less than 1 mass%-dry; and a residue including iron ore, coke and other flux. This method reduces the amounts of NOx and SOx contained in exhaust gas produced during the production of sintered ore.

Patent Literature 2 describes a method for producing sintered ore by using materials that are a mixture of powdered iron ore, a fluxing material for adjusting a composition, returned ore and a solid carbonaceous material with a concentration distribution of the solid carbonaceous material in a pallet height direction. In this sintered ore production method, to the sintering materials that are the mixture of powdered iron ore, the fluxing material for adjusting a composition, and returned ore, palm kernel shell (PKS) charcoal, which is a solid carbide produced by heat-treating palm kernel shells (PKS), is added and one or more of coke and anthracite with a particle size smaller than that of the solid carbide are added. This method reduces an amount of carbon dioxide gas emitted during the production of sintered ore, while also improving productivity of the sintering machine.

CITATION LIST

PATENT LITERATURE(S)

Patent Literature 1: JP 2003-328044 A
Patent Literature 2: JP 2013-237876 A

SUMMARY OF THE INVENTION

PROBLEM(S) TO BE SOLVED BY THE INVENTION

In Patent Literature 1, the solid content (residue) generated when biomass is thermally decomposed in an oxygen-free or low-oxygen state is used as carbonized biomass. Patent Literature 2 describes that it is sufficient to use PKS charcoal produced by heating PKS, where specifically PKS charcoal produced by heating dried PKS in an electric furnace at 700 degrees C for one hour is used.

Since carbonized biomass produced by heating (carbonizing) biomass has excellent combustibility (fast combustion rate) due to being a porous material, the carbonized biomass makes it possible to increase a sintering speed when producing sintered ore, but an excessively high sintering speed could actually reduce the finished product yield and the production rate of the sintered ore. Patent Literature 2 (paragraph [0044]) also describes that although PKS charcoal has excellent combustibility due to its micropores, if the combustibility is not controlled, the finished product yield will decrease. Here, combustibility refers to a reaction rate (combustion rate) when the carbonaceous material combusts in air. This combustion rate can be measured as follows using a thermobalance as an example. 10 mg of a carbonaceous material sample to be measured (particle size of 0.15 to 0.25 mm) is placed in a thermobalance (produced by Rigaku Thermo Plus Evo2 TG-DTA8120/H-IR Smart Loader), and an inside of the thermobalance is purged thoroughly with nitrogen. Subsequently, with nitrogen circulating at 200 ml/min, heating is carried out at a rate of 100 degrees C/min. After a temperature of the sample reaches a predetermined temperature (700 degrees C), the circulating gas is immediately switched from nitrogen to 200-ml/min air, and a weight loss of the sample is measured. Based on the obtained data on a reaction time t (elapsed time after switching of the circulating gas from nitrogen to air) and a reaction rate V (V = [weight loss at each time - weight of unburnt material at the end of measurement]/[initial weight of the sample - weight of the unburnt material at the end of measurement), a reaction rate dV/dt at each reaction rate above is calculated, and an average value of the reaction rates V in a range from 0 to 0.95 is calculated, thereby calculating a combustion rate of each of carbonaceous materials at a predetermined temperature.

An object of the invention is to provide a sintered ore production method that can improve a yield and a production rate while using carbonized wood that is carbonized biomass (biochar) as a sintering material.

MEANS FOR SOLVING THE PROBLEM(S)

The following are provided in view of an aspect(s) of the invention.

[1] A method for producing sintered ore using sintering materials, the sintering materials including: a crushed product of a compression-molded product obtained by crushing the compression-molded product obtained by compressing and molding an aggregate of carbonized wood; and at least one of coke breeze or anthracite, in which the compression-molded product has an envelope density of 0.6 $g/cm^3$ or more.

[2] The method for producing sintered ore according to [1], in which the crushed product of the compression-molded product and at least one of the coke breeze or the anthracite, of the sintering materials, are added in a latter half of granulation.

[3] The method for producing sintered ore according to [1] or [2], in which the crushed product of the compression-molded product obtained by the crushing further undergoes, after the crushing, selecting a crushed product having a particle size falling within a predetermined particle size range as the sintering material.

[4] The method for producing sintered ore according to [3], in which the predetermined particle size range is more than 0 mm and less than 10 mm.

[5] The method for producing sintered ore according to [1] or [2], in which the compression-molded product has a volatile content of 20 mass% or less.

[6] The method for producing sintered ore according to [1] or [2], in which producing the compression-molded product includes:

carbonizing a wood material to produce the carbonized wood; and
compressing and molding an aggregate of the carbonized wood using a binder to produce the compression-molded product, and
the carbonized wood has a volatile content of 15 mass% or less.

[7] The method for producing sintered ore according to [3], in which the selecting further includes: selecting a crushed product having a particle size larger than an upper limit value of the predetermined particle size range; and reusing the selected crushed product as a material for the crushed product of the compression-molded product in the crushing.

[8] The method for producing sintered ore according to [6], in which the crushed product of the compression-molded product obtained by the crushing further undergoes, after the crushing, selecting a crushed product having a particle size falling within a predetermined particle size range as the sintering materials; and the selecting further includes: selecting a crushed product having a particle size smaller than a lower limit value of the predetermined particle size range; and reusing the selected crushed product as a material for the compression-molded product in the compressing.

According to the above aspect of the invention, a compression-molded product made by compressing and molding an aggregate of carbonized wood is crushed, and the crushed product is used as one of the sintering materials, whereby a finished product yield and a production rate can be improved.

BRIEF EXPLANATION OF DRAWING(S)

Fig. 1 schematically illustrates an example of sintering equipment used in a single-stage charging single-stage ignition sintering method.
Fig. 2 schematically illustrates an example of sintering equipment used in a sintered ore production method in a first exemplary embodiment.
Fig. 3 is a diagram explaining a first production method of a carbonized-wood compression-molding crushed product.
Fig. 4 is a diagram explaining a second production method of a carbonized-wood compression-molding crushed product.
Fig. 5 is a diagram explaining a third production method of a carbonized-wood compression-molding crushed product.
Fig. 6 is a diagram explaining a fourth production method of a carbonized-wood compression-molding crushed product.

Fig. 7 is a diagram explaining a fifth production method of a carbonized-wood compression-molding crushed product.

Fig. 8 is a diagram explaining a sixth production method of a carbonized-wood compression-molding crushed product.

Fig. 9 is a diagram explaining details of production steps of carbonized-wood compression-molded products for the fourth to sixth production methods of the carbonized-wood compression-molding crushed products.

Fig. 10 is a diagram explaining a seventh production method (modification of the sixth production method) of a carbonized-wood compression-molding crushed product.

Fig. 11 schematically illustrates an example of sintering equipment used in a sintered ore production method in a second exemplary embodiment.

DESCRIPTION OF EMBODIMENT(S)

The invention is a method for producing sintered ore, using sintering materials including: a crushed product of a compression-molded product (hereinafter, for convenience, also referred to simply as a carbonized-wood compression-molding crushed product) obtained through a crushing process in which a compressed-molded product (hereinafter, for convenience, also referred to simply as a carbonized-wood compression-molded product) made by compressing and molding an aggregate of carbonized wood is crushed; and at least one of coke breeze or anthracite (hereinafter referred to as coke breeze or/and anthracite), in which the compression-molded product has an envelope density of 0.6 g/cm$^3$ or more. The crushed product (carbonized-wood compression-molding crushed product) made by crushing a compression-molded product made primarily from carbonized wood (biomass char (biochar)) and coke breeze and/or anthracite are aggregation materials used as the sintering materials. Terms used herein are defined as follows. The term "wood" refers to trunks and branches of trees, or materials made therefrom, and includes, for instance, construction waste. The term "carbonized wood" refers to a carbide obtained by heating (carbonizing) the above-described "wood". The term "aggregate of carbonized wood" refers to an aggregate of carbonized wood particles only, or an aggregate of the carbonized wood particles bonded with a binder. A size and a shape of the carbonized wood particles are not limited. The term "compressing and molding" refers to molding that involves compression, and includes not only compression molding but also, for instance, extrusion molding in which pressure is applied during extrusion. The phase "made primarily from" is used for a solid material having the largest proportion (in mass ratio) of the total solid materials. The term "crushing" refers to a process of applying energy to the compression-molded product to make it smaller than its original size. Preferably, a particle size after crushing is approximately less than 10 mm, which is suitable as the aggregation material.

The invention and preferable exemplary embodiments thereof will be described in detail below with reference to the attached drawings. The components having substantially the same function are denoted by the same or similar names and/or the same or similar reference numerals herein and in the drawings to avoid repetition of the description thereof. For the sake of explanation, a wood-derived aggregation material (carbonized wood that has not undergone a compression molding process described below, and a carbonized-wood compression-molded product that has undergone the compression molding process) is referred to as a "first sintering carbonaceous material" and a non-wood derived aggregation material (coke breeze and anthracite described below) is referred to as a "second sintering carbonaceous material". In some cases, the first sintering carbonaceous material and the second sintering carbonaceous material are distinguished from each other.

First Exemplary Embodiment

A first exemplary embodiment of the invention will be described below. First, a production method of sintered ore will be described, and then a compression-molded product (carbonized-wood compression-molded product) that is made by compressing and molding carbonized wood as a main material, and a crushed product (carbonized-wood compression-molding crushed product) obtained by crushing the carbonized-wood compression-molded product will be described.

Production Method of Sintered Ore

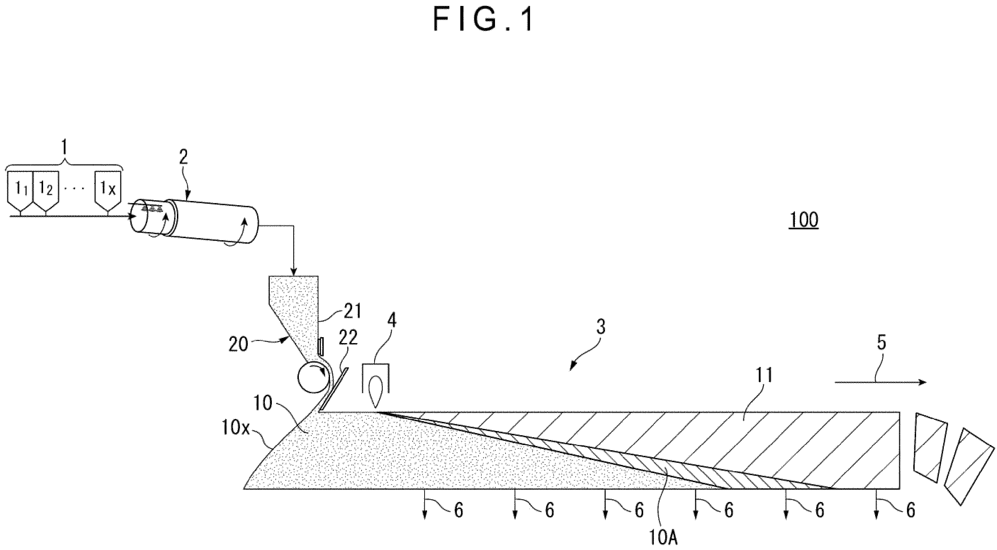

Fig. 1 schematically illustrates sintering equipment 100 used in a single-stage charging single-stage ignition sintering method using a Dwight-Lloyd (DL) sintering machine. The sintering equipment 100 includes a material tank group 1, a mixer granulator 2 (drum mixer), and a DL-type sintering machine 3.

As materials for sintered ore (sintering materials), appropriately used are iron materials such as iron ore (powder), iron-containing miscellaneous materials such as scale and steel dust, MgO-containing flux such as peridotite and serpentine, CaO-containing flux such as limestone, returned ore, and an aggregation material that are solid fuel serving as a heat source for a sintering reaction (aggregation). The aggregation material is exemplified by sintering carbonaceous materials (e.g., coke breeze and anthracite). As illustrated in Fig. 1, the sintering materials are respectively stored in material tanks ($1_1$ to $1_X$) in a material tank group 1, and are dispensed and blended in a predetermined ratio. The blended material is fed into the mixer granulator 2 (drum mixer) and mixed, and are subjected to granulation to create pseudo-particles. The granulated blended material (hereinafter, the blended material after granulation is also referred to as blended material granules) is charged through a blended material surge hopper 21 onto a pallet (not illustrated) covered with bedding ore to form a material packed bed 10.

The material packed bed 10 moves continuously in a pallet traveling direction 5 as the pallet moves. When the material packed bed 10 moves under an ignition furnace 4, the aggregation material on a surface of the material packed bed 10 is ignited with the ignition furnace 4 to start sintering the material packed bed 10. A wind box (not illustrated) is installed below the pallet moving in the pallet traveling direction 5 after ignition, and air is sucked in from underneath the pallet. This downward suction 6 supplies oxygen into the material packed bed 10, and combustion of the aggregation material in the material packed bed 10 (combustion zone 10A) progresses from the top toward the bottom, causing the material packed bed 10 to be sintered in sequence by combustion heat of the aggregation material. Sinter cake 11 obtained by sintering is discharged at a downstream end of the DL-type sintering machine 3 in the pallet traveling direction 5, and is crushed, sieved and the like to produce uniform particles, where sintered ore of a particle size chargeable into a blast furnace is used as a material for pig iron production in the blast furnace, and the remaining sintered ore is reused as return ore.

When the blended material granules are charged onto the pallet, a charging device with a segregation mechanism is used, and a gradient plate chute-type charging device 20 illustrated in Fig. 1 or the like is usually used. The gradient plate chute-type charging device 20 includes: the blended material surge hopper 21 in which the blended material granules are stored; and a gradient plate chute 22 that is slanted downward in the opposite direction to the pallet traveling direction 5. By using the gradient plate chute 22 to charge the blended material granules stored in the blended material surge hopper 21 onto the pallet, a slope 10x is formed upstream of the material packed bed 10. The blended material granules roll over the slope 10x and are classified, resulting in particle size segregation in a direction of a layer thickness (layer height) of the material packed bed 10. Specifically, the blended material granules with a small particle size are more likely to be charged in the upper part of the material packed bed 10, while the blended material granules with a large particle size are more likely to be charged in the lower part of the material packed bed 10.

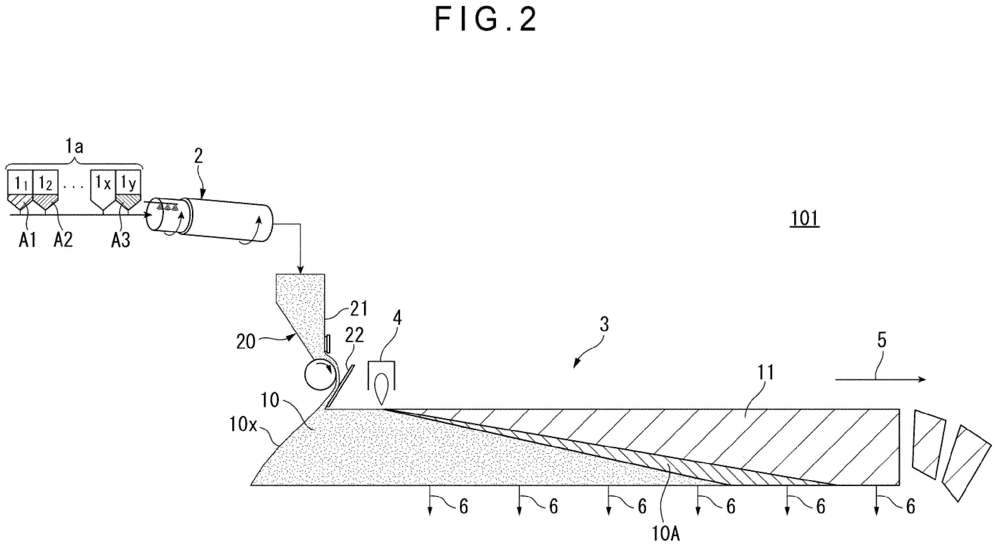

Here, the granulation process of the blended material described above is performed in order to ensure air permeability of the material packed bed. Generally, as described in the 3rd Edition of the Iron and Steel Handbook II, Iron and Steelmaking, p. 84 (Fig. 2. 4) [October 15, 1979], fine powder materials with a particle size of less than 0.25 mm, which are a main target of the granulation process, form pseudo-particles by adhering to the periphery of particles with a size of 1.00 mm or more as nuclear particles, but particles of an intermediate size of 0.25 mm or more and less than 1.00 mm are difficult to granulate and do not easily become pseudo-particles. For this reason, the particle size of the aggregation material to be blended is adjusted even when the granulation process is performed, and then charging is performed by the gradient plate chute-type charging device 20 described above, so that it is possible to adjust the distribution of the aggregation material in the height direction of the material packed bed.

The above-described second sintering carbonaceous material (e.g., coke breeze and/or anthracite) is typically used as the aggregation material for producing the sintered ore. Coke breeze is produced by crushing coke with a particle size unsuitable for use in blast furnaces (typically 40 mm or less in diameter) generated in the production process of blast furnace coke (lump coke) that is produced by heating coal in an oxygen-free or low-oxygen atmosphere, into a particle size suitable for sintering. In contrast to lump coke for blast furnaces, coke for sintering is called coke breeze. Anthracite is one of the classifications assigned to coal (lignite, bituminous coal and anthracite) and is the most carbonized coal. Coal with a fuel ratio (fixed carbon/volatile content (in mass ratio)) of 4 or more, or, simply, coal with a volatile content of 10% or less and a carbon content of 90 mass% or more (on anhydrous and ash-free basis) is classified as anthracite. Both anthracite and coke breeze are crushed to a particle size suitable for sintering use (generally less than 10 mm in diameter, with an average particle size of about 2 mm) before use.

Next, the production method of sintered ore in the exemplary embodiment will be described with reference to Fig. 2. In the production method of sintered ore in the exemplary embodiment, as the aggregation materials, a crushed product of a carbonized-wood compression-molded product (carbonized-wood compression-molding crushed product) obtained by compressing and molding an aggregate of carbonized wood and coke breeze and/or anthracite are used.

Fig. 2 schematically illustrates an example of sintering equipment 101 used in the sintered ore production method in the exemplary embodiment. The sintering equipment 101 differs from the above-described sintering equipment 100 only in that a carbonized-wood compression-molding crushed product is added to the sintering materials stored in the material tank group 1. Only differences from the sintering equipment 100 will be described with any overlapping explanations omitted. As illustrated in Fig. 2, the sintering equipment 101 includes a material tank group 1a including material tanks $1_1$ to $1_X$, and $1_y$, in which for instance, coke breeze A, anthracite A2, and a carbonized-wood compression-molding crushed product A3 are respectively stored in the material tanks $1_1$, $1_2$, and $1_y$. Predetermined amounts of the stored coke breeze A1, anthracite A2, and carbonized-wood compression-molding crushed product A3 are dispensed with other sintering materials in the required blending ratios (a material with a blending ratio of 0 mass% is not dispensed), thereby providing a blended material. In addition to the above-described configuration, it is sufficient if the blended material containing the carbonized-wood compression-molding crushed product A3 and the coke breeze A1 or/and the anthracite A2 based on the respective blending ratios can be charged into the DL-type sintering machine 3. For instance, although not illustrated, two or more of the coke breeze A1, anthracite A2, and carbonized-wood compression-molding crushed product A3 may be mixed in advance to ensure a homogeneous mixture based on the respective blending ratios, and the mixture may be stored in a single material tank and dispensed in a predetermined amount.

As described above, when producing sintered ore, the carbonized-wood compression-molded product and the second sintering carbonaceous material (coke breeze or/and anthracite) are used as the aggregation materials. Here, in terms of the mass ratio of the fixed carbon content [mass%], provided that the total of the aggregation materials is defined as 100 mass%, the carbonized-wood compression-molded product is preferably 50 mass% or less. If the blending ratio of the carbonized-wood compression-molded product exceeds 50 mass%, the excellent combustibility of the carbonized-wood compression-molded product causes the sintering rate to increase and the temperature in the raw material packed bed does not rise sufficiently, which may result in a decrease in yield. Blending the carbonized-wood compression-molded product even with a small amount as the aggregation material (a case where the blending ratio of the carbonized-wood compression-molded product exceeds 0 mass%) can contribute to reducing $CO_2$ emissions. For the blending ratios of the carbonized-wood compression-molded product and the second sintering carbonaceous material (coke breeze or/and anthracite), it is also preferable to adjust the blending ratio of the carbonized-wood compression-molded product so that the fixed carbon content (industrial analysis value) is equal between when using only the second sintering carbonaceous material and when using the carbonized-wood compression-molded product and the second sintering carbonaceous material. This is because of the following: the second sintering carbonaceous material is different from the carbonized-wood compression-molded product in an ash content and the volatile content, and therefore making the fixed carbon content equal allows a thermal effect of the carbonaceous materials during combustion to be substantially equivalent.

Carbonized-Wood Compression-Molded Product and Crushed Product thereof

Next, an envelope density and a volatile matter of each of the carbonized-wood compression-molded product and the crushed product thereof (carbonized-wood compression-molding crushed product) will be described. In the invention, by using the carbonized-wood compression-molded product as one of the aggregation materials to produce sintered ore, the finished product yield and the production rate of sintered ore can be improved compared with when sintered ore is produced using the carbonized wood or its crushed product as it is. The envelope density of the carbonized-wood compression-molded product is preferably 0.6 $g/cm^3$ or more, more preferably 0.7 $g/cm^3$ or more. By making the envelope density of the carbonized-wood compression-molded product 0.6 $g/cm^3$ or more, it is possible to suppress an excessive increase of the combustion rate, and the finished product yield and therefore the production rate can be improved compared with when the carbonized wood is used. Moreover, a production amount of sintered ore is increased due to the increased charging density of the blended material. The envelope density of the carbonized-wood compression-molded product is preferably 1.3 $g/cm^3$ or less. This is because the effect of improving combustibility is not achieved when the envelope density exceeds 1.3 $g/cm^3$.

The envelope density can be measured using a bead volume replacement method. The bead volume replacement method is a measurement method used by Micromeritics, and is a volume replacement method that uses DryFlo (pseudo-fluid), which is highly fluid beads, as the measurement sample. Specifically, a volume X of only beads in a sample chamber is measured first, and then a volume Z of the measured sample placed in a bead layer of the sample chamber is measured, and a volume (envelope volume) Y of the measured sample, including pores and cavities, is calculated from a difference (Z - X) between the two volumes. The envelope density [$g/cm^3$] is a value obtained by dividing the mass of the measured sample by the envelope volume Y.

It is preferable to use the carbonized-wood compression-molded product having a volatile content of 20 mass% or less. The volatile content can be measured in accordance with JIS M8812:2006. The reason for limiting the volatile content of carbonized-wood compression-molded product to 20 mass% or less will be described below. A volatile content of a typical coal-based aggregation material (second sintering carbonaceous material, i.e,. coke breeze or/and anthracite) is controlled to be equal to or less than a predetermined value (e.g., 10 mass%). This is because unburnt components (tar content) derived from the volatile content flow into exhaust gas, causing malfunction of machines such as an exhaust gas electric precipitator and an exhaust gas blower. On the other hand, if the volatile content of the carbonized-wood compression-molded product is equal to that of the coal-based aggregation material, unburned components (tar content) that flow into exhaust gas of the carbonized-wood compression-molded product are less than those of the coal-based aggregation material, and therefore the upper limit for the volatile content of the carbonized-wood compression-molded product is set at 20 mass% or less, which is different from that for the coal-based aggregation material.

Here, the volatile content and envelope density of the carbonized-wood compression-molded product are unchanged before and after crushing. Therefore, the volatile content and envelope density of the carbonized-wood compression-molded product may be measured, and these measured values may also be used as the volatile content and envelope density of the carbonized-wood compression-molding crushed product. Alternatively, the volatile content and envelope density of the carbonized-wood compression-molding crushed product may be measured, and these measured values may also be used as the volatile content and envelope density of the carbonized-wood compression-molded product.

Production Method of Carbonized-Wood Compression-Molding Crushed Product

Production methods (first to seventh production methods) of a carbonized-wood compression-molding crushed product used for producing sintered ore will be described below with reference to the drawings attached.

First Production Method

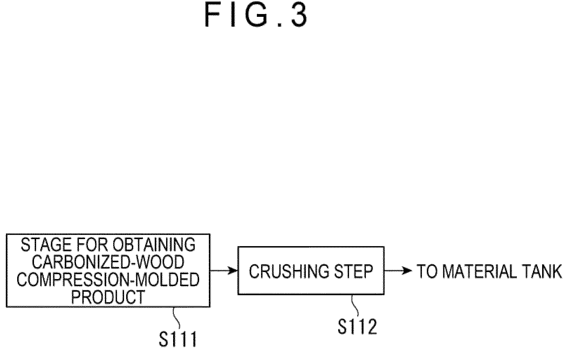

A first production method of a carbonized-wood compression-molding crushed product will be described with reference to Fig. 3. First, in a stage (S111) for obtaining a carbonized-wood compression-molded product, a carbonized-wood compression-molded product is prepared. The carbonized-wood compression-molded product to be prepared is, for instance, made by compressing and molding an aggregate of crushed particles of the carbonized wood using a compression-molding machine or extrusion-molding machine. Among carbonized-wood compression-molded products on the market, ones having an envelope density of 0.6 g/cm$^3$ or more are usable. The production method of the carbonized-wood compression-molded product is not limited as long as the carbonized-wood compression-molded product having an envelope density of 0.6 g/cm$^3$ or more is produced. For instance, in general, carbonized wood is produced by carbonizing crushed wood, and a carbonized-wood compression-molded product is made from carbonized wood.

In a crushing step (S112), the carbonized-wood compression-molded product prepared in the stage (S111) for obtaining a carbonized-wood compression-molded product is crushed. Any crusher capable of crushing the carbonized-wood compression-molded product is usable and is exemplified by a rod mill, hammer crusher, roll crusher, super sander, jaw crusher, and fret mill.

A particle size of the carbonized-wood compression-molding crushed product, which is not particularly limited, is preferably, for instance, less than 10 mm (passing through a sieve mesh opening of 10.0 mm) (i.e., a particle size range (a predetermined particle size range) of the carbonized-wood compression-molding crushed product is preferably more than 0 mm and less than 10 mm). An average particle size of the carbonized-wood compression-molding crushed product is preferably 5 mm or less. This is because, if the average particle size is too large (more than 5 mm), when sintered ore is produced, the carbonized-wood compression-molding crushed product will concentrate in a lower part of the pallet and stuck to grate bars, causing equipment problems. Further, the average particle size of the carbonized-wood compression-molding crushed product is preferably 1 mm or more. This is because, if the average particle size is too small (less than 1 mm), poor ventilation in the material packed bed will be caused when producing sintered ore, resulting in a decrease in productivity. The term "particle size" of the carbonized-wood compression-molding crushed product and the like herein refers to a value measured using a sieve in accordance with JIS Z8801-1:2019. The term "average particle size" herein refers to an arithmetic mean diameter. The arithmetic mean diameter is an average value calculated by: weighting the median of each particle size category by a mass fraction of the corresponding particle size category; and summing the weighted values, based on a particle size distribution when the sample is sieved (classified) using sieves with different mesh openings.

The average particle size of the carbonized-wood compression-molding crushed product is obtained as follows. After being dried at 105 degrees C for two hours or more, the carbonized-wood compression-molding crushed product is sieved using six different types of sieves with different mesh openings for five minutes each, and a sample mass wi for each particle size category i is measured. As shown in Table 1, the particle sizes (0.25 mm, 0.5 mm, 1.0 mm, 2.8 mm, 4.76 mm, 10.0 mm) that are boundary values for the particle size category are the mesh openings of the sieves used for classification. For instance, a particle size category "0.5-1.0" refers to sizes of particles retained on a sieve with a 0.5-mm mesh opening when sieved and passing through a sieve with a 1.0-mm aperture when sieved. The same applies to the particle size categories "10.0 to 4.76", "4.76 to 2.8", "2.8 to 1.0", "1.0 to 0.5", and "0.5 to 0.25". A particle size category "-0.25" refers to sizes of particles passing through a sieve with a 0.25-mm mesh opening when sieved.

Table 1

| Particle size (mm) | Particle size category | | | | | |
|---|---|---|---|---|---|---|
| | 10.0 to 4.76 | 4.76 to 2.8 | 2.8 to 1.0 | 1.0 to 0.5 | 0.5 to 0.25 | -0.25 |
| Representative value xi | 7.5 | 3.8 | 1.9 | 0.75 | 0.375 | 0.125 |

The average particle size [mm] is the arithmetic mean diameter calculated by weighting a representative value xi (≈ median) of each particle size category by the mass fraction (mass ratio) of each particle size category, as shown in a formula (i) below.

$$\text{Average particle size} = \Sigma wixi/\Sigma wi \quad \ldots \text{(i)}$$

xi: representative value in particle size category i
wi: sample mass in particle size category i

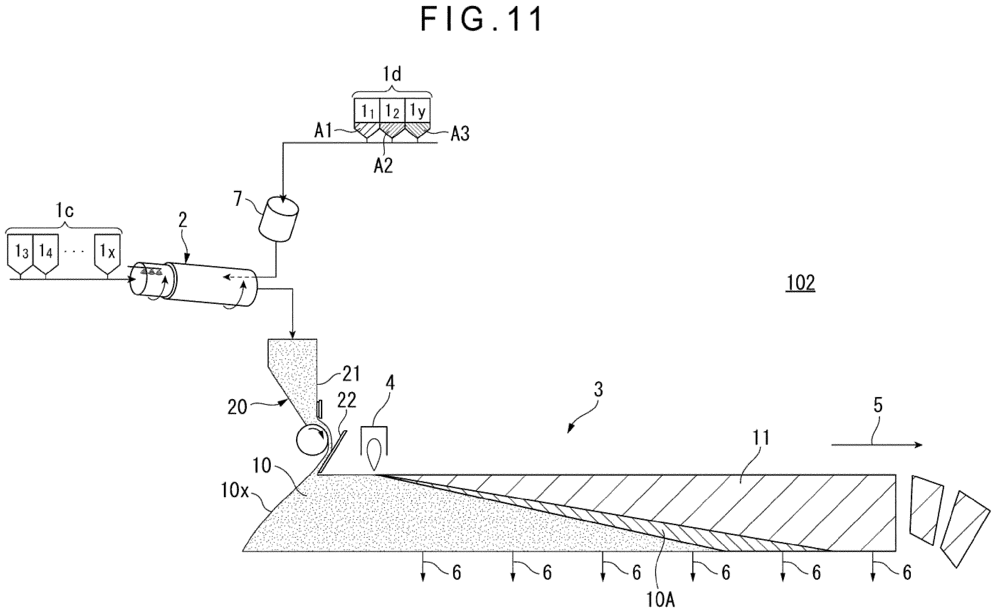

The carbonized-wood compression-molding crushed product that has been crushed in the crushing step (S112) is transported into the material tank $1_y$ (see Figs. 2 and 11) where the carbonized-wood compression-molding crushed product is to be stored. The carbonized-wood compression-molding crushed product stored in the material tank is appropriately dispensed from the material tank $1_y$ (see Figs. 2 and 11) based on a predetermined blending ratio and used as the sintering material, as described in the section on the sintered ore production method above.

Second Production Method

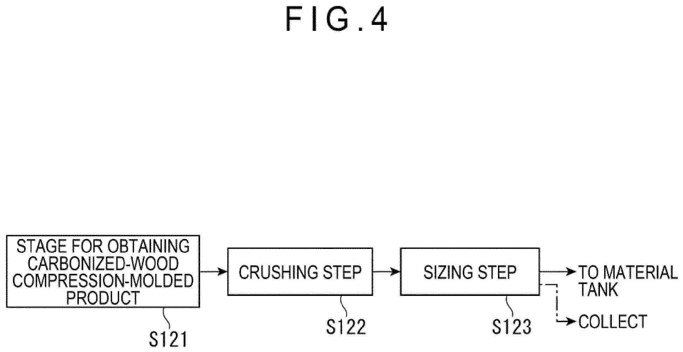

A second production method of a carbonized-wood compression-molding crushed product will be described with reference to Fig. 4. As illustrated in Fig. 4, the second production method includes a sizing step (S123) in addition to the steps of the first production method. A stage (S121) for obtaining a carbonized-wood compression-molded product and a crushing step (S122) in the second production method are the same as the stage (S111) for obtaining the carbonized-wood compression-molded product and the crushing step (S112), respectively, in the first production method. Therefore, duplicating descriptions of those steps are omitted. The sizing step (S123) will be described below.

The sizing step (S123) is additionally carried out, for instance, when the particle size or particle size distribution of the carbonized-wood compression-molding crushed product produced in the crushing step (S122) is not suitably used, as it is, as the aggregation material for the sintering material. In the sizing step (S123), crushed particles having a particle size included in the predetermined particle size range are selected from the carbonized-wood compression-molding crushed products obtained in the crushing step (S122). Only the selected crushed particles are used as the aggregation material. Thus, the sizing step (S123) is also a selection step for selecting crushed particles of the carbonized-wood compression-molding crushed product suitable as the aggregation material.

The predetermined particle size range (particle size range of the carbonized-wood compression-molding crushed product used as the aggregation material of the sintering material) is preferably, for instance, 0.25 mm or more and less than 4.76 mm. A sieve with a mesh opening of 4.76 mm and a sieve with a mesh opening of 0.25 mm are used for selection for this particle size range. Specifically, the carbonized-wood compression-molding crushed product passing through the sieve with a mesh opening of 4.76 mm and retained on the sieve with a mesh opening of 0.25 mm is selected and used as the aggregation material of the sintering material. Moreover, the carbonized-wood compression-molding crushed product with particle sizes less than 0.25 mm or exceeding 4.76 mm, that is, the carbonized-wood compression-molding crushed product passing through the sieve with a mesh opening of 0.25 mm or retained on the sieve with a mesh opening of 4.76 mm is separately collected (see a dash-dotted line in Fig. 4).

In the sizing step (S123), as carried out in Examples described below, crushed particles having a predetermined particle size distribution may be selected from the carbonized-wood compression-molding crushed product obtained in the crushing step (S122). The term "particle size distribution" refers to a distribution of a percentage (mass%) of particles in each particle size category, and the term "predetermined particle size distribution" is appropriately determined based on operational results. A selection method of crushed particles of the carbonized-wood compression-molding crushed product having a predetermined particle size distribution (particle size distribution of the carbonized-wood compression-molding crushed product used as the aggregation material of the sintering material) includes: classifying crushed particles into four or more particle size categories using three or more kinds of sieves having different mesh openings; and mixing the crushed particles in the respective particle size categories in a ratio so as to form a predetermined particle size distribution. Thus the selected crushed particles are used as the aggregation material.

The carbonized-wood compression-molding crushed product having a particle size falling within the predetermined particle size range or the carbonized-wood compression-molding crushed products having the predetermined particle size distribution, which has been selected in the sizing step is transported to the material tank $1_y$ (see Figs. 2 and 11) to be stored and used as the aggregation material of the sintering material. As described above, it is preferable that the carbonized-wood compression-molding crushed product obtained through the crushing step further undergoes, after the crushing step, the selection step for selecting, as the sintering material, the crushed particles having a particle size falling within the predetermined particle size range. Alternatively, the carbonized-wood compression-molding crushed product obtained through the crushing step may further undergo the selection step for selecting, as the sintering material, the crushed particles having the predetermined particle size distribution. Using the carbonized-wood compression-molding crushed product after the sizing step enables the maximum productivity of the sintered ore. The crushed particles of the carbonized-wood compression-molding crushed product not selected but collected are applicable for any usage after the collection.

Third Production Method

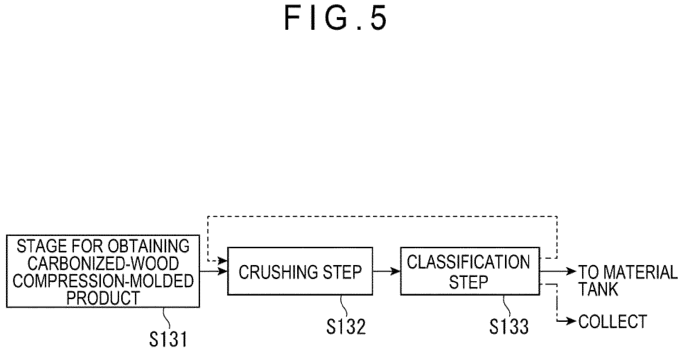

A third production method of a carbonized-wood compression-molding crushed product will be described with reference to Fig. 5. As illustrated in Fig. 5, the third production method includes a classification step (S133) in addition to the steps of the first production method. A stage (S131) for obtaining a carbonized-wood compression-molded product and a crushing step (S132) in the third production method are the same as the stage (S111) for obtaining the carbonized-wood compression-molded product and the crushing step (S112), respectively, in the first production method. Therefore, duplicating descriptions of those steps are omitted. The classification step (S133) will be described below.

Similar to the sizing step (S123) in the second production method, the classification step (S133) is additionally carried out, for instance, when the particle size or particle size distribution of the carbonized-wood compression-molding crushed product produced in the crushing step (S132) is not suitably used, as it is, as the aggregation material for the sintering material. While the crushed particles of the carbonized-wood compression-molding crushed product not selected but collected are applicable for any usage in the sizing step (S123) in the second production method, some of the crushed particles not selected but collected are reused as a material for producing the carbonized-wood compression-molding crushed product in the classification step (S133) in the third production method. Reuse allows the carbonized-wood compression-molding crushed product to have a suitable particle range as the aggregation material.

In the classification step (S133), the crushed particles of the carbonized-wood compression-molding crushed product produced in the crushing step (S132) are classified into at least three categories below on a basis of a predetermined particle size range (particle size range of the carbonized-wood compression-molding crushed products used as the aggregation material of the sintering materials) or a predetermined particle size distribution (particle size distribution of the carbonized-wood compression-molding crushed products used as the aggregation material of the sintering materials) (hereinafter, the predetermined particle size range or the particle size distribution is also referred to as a particle size standard). A first category includes crushed particles of the carbonized-wood compression-molding crushed product selected as having a particle size satisfying the particle size standard (hereinafter, also referred to as a first particle size crushed product). A second category includes crushed particles of the carbonized-wood compression-molding crushed product having a particle size exceeding an upper limit value of the particle size standard (hereinafter, also referred to as a second particle size crushed product). A third category includes crushed particles of the carbonized-wood compression-molding crushed product having a particle size smaller than a lower limit value of the particle size standard (hereinafter, also referred to as a third particle size crushed product). Thus, the classification step (S133) is also a selection step for selecting the crushed particles of the carbonized-wood compression-molding crushed product (first particle size crushed product) as the aggregation material.

Classification in the classification step (S133) can be performed using a plurality of sieves having different mesh openings similar to the above-described sizing step (S123). The first particle size crushed product is transported into the material tank $1_y$ (see Figs. 2 and 11), stored therein, and used as the aggregation material of the sintering material. The second particle size crushed product is transported to the crushing step (S132) (see a dashed line in Fig. 5) to be used as a material for producing the carbonized-wood compression-molding crushed product. By undergoing the crushing step (S132), the second particle size crushed product is crushed to a particle size satisfying the particle size standard. The third particle size crushed product is separately collected (see a dash-dotted line in Fig. 5). As described above, it is preferable to further select the crushed particles having a particle size larger than the upper limit value in the predetermined particle size range in the selection step and reuse the selected crushed particles as the material for the crushed product of the compression-molded product in the crushing step.

For instance, when the particle size standard falls within a predetermined particle size range and the predetermined particle size range is 0.25 mm or more and less than 4.76 mm, the carbonized-wood compression-molding crushed product having a particle size equal to or more than the upper limit value (4.76 mm) of the particle size standard can be again crushed in the crushing step (S132) along with the carbonized-wood compression-molded product obtained. The crushed product having a particle size less than the upper limit value (4.76 mm) can be thus obtained. On the other hand, the carbonized-wood compression-molding crushed product having a particle size smaller than the lower limit value (0.25 mm) of the particle size standard is not limited in terms of usage after collection, however, for instance, reusable for producing the carbonized-wood compression-molded product to be prepared in the stage (S131) for obtaining the carbonized-wood compression-molded product. For instance, when the particle size standard is the predetermined particle size distribution, a lower limit value of a particle size category of the smallest particle size in the particle size categories in which a particle mass faction (mass%) exceeds 0 mass% is the lower limit value of the particle size standard, and an upper limit value of a particle size category of the largest particle size in the particle size categories in which a particle mass faction (mass%) exceeds 0 mass% is the upper limit value of the particle size standard, As described above, the carbonized-wood compression-molding crushed product obtained through the crushing step further has, after the crushing step, the selection step for selecting, as the sintering material, the crushed product having a particle size falling within the predetermined particle size range. It is also preferable to further select a crushed product having a particle size smaller than the lower limit value of the predetermined particle size range in the selection step and reuse the selected product as the material of the compression-molded product in the compression step. Alternatively, the carbonized-wood compression-molding crushed product obtained through the crushing step further has, after the crushing step, the selection step for selecting, as the sintering material, the crushed product having the predetermined particle size distribution. It is also allowable to further select a crushed product having a particle size smaller than the lower limit value of the predetermined particle size distribution in the selection step and reuse the selected product as the material of the compression-molded product in the compression step.

Fourth to Sixth Production Methods

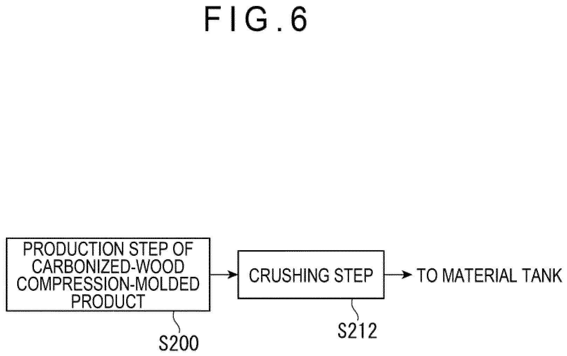

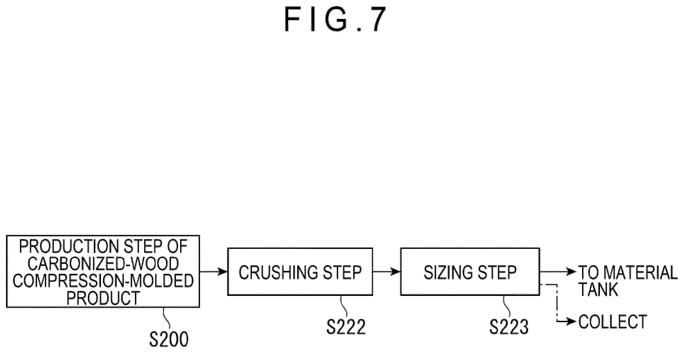

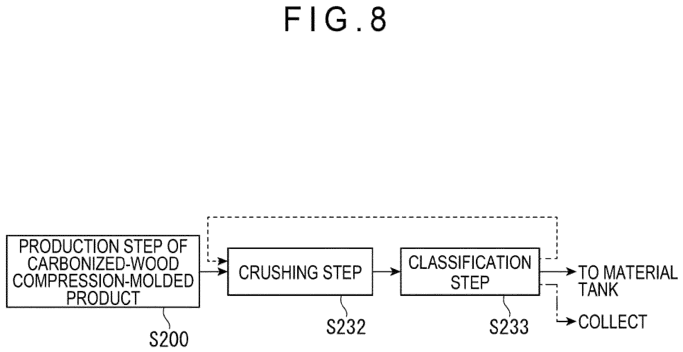

In the first to third production methods described above, the carbonized-wood compression-molding crushed product is produced using the carbonized-wood compression-molded product obtained in the stage (S111, S121, or S131) for obtaining the carbonized-wood compression-molded product. In the fourth to sixth production methods described later, the carbonized-wood compression-molded product is produced from wood and the carbonized-wood compression-molding crushed product is produced using the produced carbonized-wood compression-molded product. The fourth to sixth production methods will be described with reference to Figs. 6 to 9.

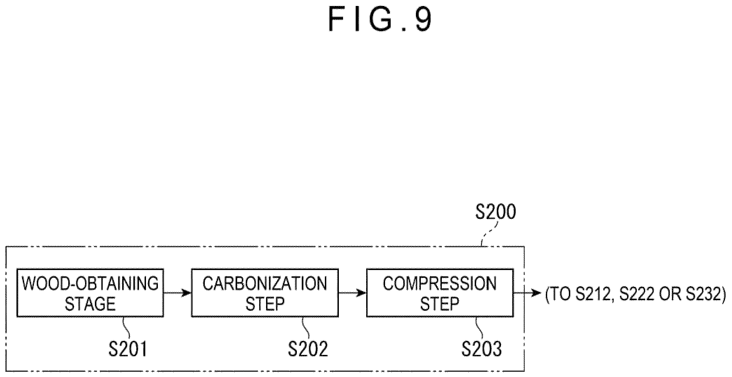

Figs. 6 to 8 are diagrams explaining the fourth to sixth production methods, respectively. Fig. 9 is a diagram explaining details of a production step (S200) of the carbonized-wood compression-molded product illustrated in Figs. 6 to 8 (the fourth to sixth production methods). As illustrated in Figs. 6 to 8, the fourth to sixth production methods are different from the first to third production methods only in that the stage (S111) for obtaining the carbonized-wood compression-molded product in the first to third production methods is replaced by the production step (S200) of the carbonized-wood compression-molded product. Other than the above, the steps (the crushing step S212, S222, S232; the sizing step S223; and classification step S233) are respectively the same as the steps (the crushing step S112, S122, S132; the sizing step S123; and classification step S133) in the first to third production methods. Therefore, duplicating descriptions of these steps are omitted. The production step (S200) of the carbonized-wood compression-molded product will be described below.

Production Step of Carbonized-Wood Compression-Molded Product

The production step (S200) of the carbonized-wood compression-molded product illustrated in Figs. 6 to 8 will be described with reference to Fig. 9.

In a wood-obtaining stage (S201), wood is obtained as a material. The type of wood used as the material is not limited, and one or more of various types of wood can be used. In addition, while there are no particular restrictions on a size of wood (in other words, the size of the carbonized wood), the size of wood is preferably 30 mm or less so that it is easier to compress an aggregate of crushed particles of the carbonized wood in a compression step (S203) described below. Thus, the size of wood can be made to a desired size by, for instance, crushing wood in advance before carbonizing the wood.

In a carbonization step (S202), wood is carbonized to produce carbonized wood. Examples of equipment for carbonizing wood include external combustion rotary kiln, internal combustion rotary kiln, fluidized bed reactor, and moving bed reactor (shaft furnace). By carbonizing wood, the volatile content remaining in the carbonized wood can be reduced compared to the volatile content remaining in the wood. In the exemplary embodiment, it is preferable to carbonize wood so that the volatile content of the carbonized wood is 15 mass% or less. That is, the production step for the compression-molded product includes a carbonization step of carbonizing wood to produce carbonized wood, and a compression step of compressing and molding an aggregate of the carbonized wood using a binder to produce a compression-molded product. The volatile content of the carbonized wood is preferably 15 mass% or less. In the compression step (S203) described later, since the carbonized wood and the binder are sometimes mixed to produce the carbonized-wood compression-molded product, the volatile content of the carbonized-wood compression-molded product may increase depending on the volatile content of the binder added.

In order to set the volatile content of the carbonized-wood compression-molded product at 20 mass% or less as described above, it is only necessary to reduce the volatile content of the carbonized wood by an increased amount of the volatile content due to the addition of the binder. Since the increased amount of the volatile content due to the addition of the binder can be estimated to be 5 mass%, it is only necessary to render the volatile content of the carbonized wood as 15 mass% or less in order to set the volatile content of the carbonized-wood compression-molded product at 20 mass% or less.

The conditions for carbonizing wood, which include a carbonization temperature and a carbonization time, may be set so that the volatile content of the carbonized wood is 15 mass% or less. For instance, if cedar wood chips are carbonized at 800 degrees C for one hour, the volatile content of the carbonized wood can be reduced to 4.8 mass%. In order to adjust the volatile content of the carbonized wood, it **is** preferable to set the carbonization temperature and/or the carbonization time appropriately.

In the compression step (S203), a carbonized-wood compression-molded product is produced by compressing the aggregate of the carbonized wood produced in the carbonization step (S202). It is only necessary to produce a carbonized-wood compression-molded product with an envelope density of 0.6 g/cm$^3$ or more by compressing the aggregate of the carbonized wood. The compression conditions, molding method, type and amount of the binder, and amount of water used can be determined as appropriate. As described above, the envelope density of the carbonized-wood compression-molded product is more preferably 0.7 g/cm$^3$ or more, still more preferably 1.3 g/cm$^3$ or less.

When producing the carbonized-wood compression-molded product, not only a compression-molding machine but also an extrusion-molding machine may be used. For instance, roller-type (ring-die type, flat-die type) or screw-type extrusion-molding machines are usable. As methods of molding using a compression molding machine, for instance, a roll press method using a roll rotation-type compression molding machine and a tabletting method using a biaxial compression molding machine may be used. The carbonized-wood compression-molded product may have any shape (e.g., a pellet (cylindrical shape) or a briquette (pillow shape)).

When compressing the aggregate of the carbonized wood, it is preferable to use a binder or water along with a binder. Examples of the binder include cornstarch (starch), bentonite, coal tar, biomass tar, petroleum pitch, and cement. The amount of the binder is preferably added in a blending ratio from 1 mass% to 10 mass% (not included in total mass) provided that the carbonized wood is taken as 100 mass%. A higher binder content results in greater strength and better handling. On the other hand, if the blending ratio of the binder to the carbonized wood exceeds 10 mass%, the cost will increase. To some binders (such as cornstarch), it is also preferable to add additives such as alkalis or acids in order to produce a strong molded product. The carbonized wood is mixed and kneaded with the binder and water and this mixture is fed to a compression molding machine or an extrusion molding machine, whereby the carbonized-wood compression-molded product can be produced. Before mixing and kneading the carbonized wood, the carbonized wood may be further crushed (e.g., to 1 mm or less of the average particle size). Furthermore, it is also possible to use a device (e.g., extruder) that can crush the carbonized wood at the same time as kneading.

The carbonized-wood compression-molded product produced in the compression step (S203) is transported to the crushing step (S112, S122, S132) as illustrated in Figs. 9 and 6 to 8. By producing the carbonized-wood compression-molded product using the binder in the compression step (S203), the carbonized-wood compression-molded product can be prevented from being excessively crushed in a downstream step, i.e., the crushing step (S112, S122, S132). The binding force of the binder makes it easier to obtain the carbonized-wood compression-molding crushed product with a desired particle size when the carbonized-wood compression-molded product is crushed.

Seventh Production Method

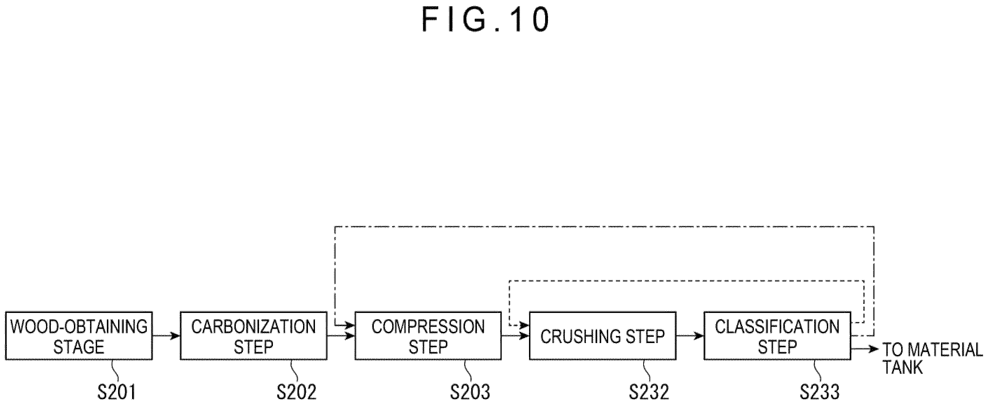

A seventh production method of a carbonized-wood compression-molding crushed product will be described with reference to Fig. 10. As illustrated in Fig. 10, the seventh production method is a modification of the sixth production method. The seventh production method is different from the sixth production method only in that the carbonized-wood compression-molding crushed product (third particle size crushed product) collected in the classification step (S133) and having a particle size smaller than the lower limit value of the particle size standard is transported to the compression step (S203) of the production step (S200) of the carbonized-wood compression-molded product as illustrated in a dash-dotted line. The third particle size crushed product is returned to the above-described compression step (S203) to be reused as the material of the carbonized-wood compression-molded product. By compressing and molding the third particle size crushed product having a small particle size and the carbonized wood that has been transported through the carbonization step S202 together with the binder or the like added thereto, the carbonized-wood compression-molded product satisfying the particle size standard is producible.

In the exemplary embodiment, the carbonized-wood compression-molding crushed product obtained by crushing the carbonized-wood compression-molded product is used as one of the aggregation materials. The carbonized wood obtained by simply carbonizing wood is a porous material, therefore excessively combustible. If this carbonized wood is used as it is as the aggregation material to produce sintered ore, as shown in Examples below, the yield and production rate of sintered ore will be reduced. On the other hand, the compression-molded product obtained by compressing an aggregate of the carbonized wood (carbonized-wood compression-molded product) is less likely to combust excessively because the number of pores and/or the volume of the pores in the carbonized wood has been reduced by compression. And by suppressing excessive combustibility, the finished product yield and the production rate of sintered ore can be prevented from reducing and improved, as shown in Examples below. Because of having greater strength and bulk density than the carbonized wood, the carbonized-wood compression-molded product can be transported in large quantities at once without turning into powder.

Second Exemplary Embodiment

Another exemplary embodiment of the invention will be described below. In the exemplary embodiment, among the sintering materials, the carbonized-wood compression-molding crushed product and at least one of coke breeze or anthracite (coke breeze and/or anthracite) are added in the latter half of a granulation step. Here, "the latter half of the granulation step" refers to the latter half of the time period when the "total granulation time" (described later) **is** divided into two halves. Fig. 11 schematically illustrates an example of sintering equipment 102 used in the sintered ore production method in the exemplary embodiment. The sintering equipment 102 differs from the above-described sintering equipment 100 and 101 in that only the entire amount of the aggregation materials among the sintering materials is added (post-added, added later) in the latter half of the granulation step. Only differences from the sintering equipment 100, 101 will be described with any overlapping explanations omitted. The production method of the carbonized-wood compression-molding crushed product used as the aggregation material for the sintering material in the second exemplary embodiment is the same as the production method of the carbonized-wood compression-molding crushed product in the first exemplary embodiment (the first to seventh production methods described above), therefore duplicating description will be omitted.

As illustrated in Fig. 11, the sintering equipment 102 includes a material tank group 1c for storing the sintering materials other than the aggregation materials, a material tank group 1d in which the aggregation materials are stored, and a mixer 7 that mixes the aggregation materials. The coke breeze A1, anthracite A2, and carbonized-wood compression-molding crushed product A3 are respectively stored in the material tanks $1_1$, $1_2$, and $1_y$ of material tank group 1d. The coke breeze A1, anthracite A2, and carbonized-wood compression-molding crushed product A3 respectively stored in the material tanks $1_1$, $1_2$, and $1_y$ of the material tank group 1d are dispensed at predetermined amounts based on the respective blending ratios and blended, and then mixed with the mixer 7 to form a homogenized mixture (hereinafter, also referred to as an aggregation material mixture).

The addition of the aggregation materials in the latter half of the granulation step (post-addition of the aggregation materials) is performed as follows. First, the sintering materials (excluding the aggregation materials) are dispensed from the respective material tanks ($1_3$ to $1_X$) in the material tank group 1c based on the predetermined blending ratios, and fed into the granulator and mixed. After mixing the sintering materials excluding the aggregation materials, humidity of the mixture is conditioned and granulation of the mixture is started (hereafter, granulated ones of the sintering materials excluding the aggregation material are referred to as pre-granules). After a certain amount of time has elapsed since the start of granulation (in the middle of the granulation step), the above-described aggregation material mixture is added into the granulator to produce blended material granules. By adding the aggregation material mixture at an appropriate later timing, the pre-granules are coated with the aggregation materials (i.e. the aggregation materials are not contained within the pre-granules) and are either attached to a surface of the pre-granules or exists as independent granules unattached thereto. It is thus preferable to add only the aggregation materials (carbonized-wood compression-molding crushed product, and coke breeze and/or anthracite) during the latter half of the granulation step (the latter half period of the total granulation time in the granulation step).

Specifically, as illustrated in Fig. 11, the cylindrical mixer granulator 2 of a piston flow type with a central axis slanting downward toward downstream is used, and a small conveyor belt is inserted from a downstream outlet to a predetermined position inside the mixer granulator 2. The sintering materials except for the aggregation material (hereinafter, also referred to as sintering materials before post-addition) are charged from an upstream inlet and mixed, subsequently the mixed sintering materials before post-addition are hydrated, and move downstream while being granulated. The aggregation material mixture to be added later is transported from the downstream outlet of the mixer granulator 2 to an upstream side of an inside of the mixer granulator 2 via the conveyor belt. The aggregation material mixture transported is added at a predetermined position to the pre-granules that have been moving through the granulator from the upstream side while being granulated. All the sintering materials (pre-granules and aggregation material mixture) are granulated and discharged from the downstream outlet as the blended material granules. The invention is not limited to the above configuration. It is only necessary that the aggregation materials (coke breeze A1, anthracite A2, and carbonized-wood compression-molding crushed product A3) mixed in the predetermined blending ratios are added at a predetermined timing later in the granulation step.

The granulation time of the sintering materials before post-addition until the addition of the aggregation material mixture preferably accounts for from 75% to 96% relative to the total granulation time of the sintering materials. That is, the timing of the post-addition preferably falls within a range from 75% to 96% of the total granulation time of the sintering materials in the granulation step. The timing of the post-addition more preferably falls within a range from 80% to 96% of the total granulation time of the sintering materials in the granulation step. For instance, if the total granulation time is 240 seconds, the blended material excluding the aggregation material mixture (sintering materials before post-addition) may be granulated for 225 seconds, and then the aggregation material mixture may be added and granulated for 15 seconds. If the post-addition is made at a timing earlier than 75% of the total granulation time, the aggregation materials cannot be adequately avoided from being contained into the granules. If the post-addition is made at a timing later than 96% of the total granulation time, the granulation process of the aggregation materials is insufficient. Here, the "total granulation time" refers to the time during which the sintering materials are granulated, and does not include the time during which the sintering materials are fed into the granulator and hydrated, i.e., the sintering materials are simply mixed (mixing time). A drum mixer, which is primarily used as a granulator in sintered ore production equipment, is of a constant velocity piston flow type. Therefore, the post-addition position can be determined by making the granulation time described above correspond to a distance of the drum mixer in a machine length direction.

As described above, when the aggregation material mixture is post-added, the granules of the sintering materials are coated with the aggregation material mixture, accelerating the reaction with atmospheric oxygen supplied to the material packed bed. The aggregation material mixture also combusts with sufficient heat supplied by the heated atmosphere. As a result, the combustion rate of the aggregation materials is increased, resulting in higher productivity. If the aggregation materials are contained by batch granulation, it is difficult to receive the supply of oxygen and heat necessary for combustion. In addition, the use of the blended material granules coated with a highly combustible carbonized-wood compression-molding crushed product and a less combustible second sintering carbonaceous material (coke breeze or/and anthracite), makes it possible to ensure a high temperature holding time, thus improving the finished product yield and the production rate.

Examples

Tests on the invention described above and configurations applicable to the invention will be described below.

Example 1

In Example 1, carbonized wood WC1 and WC2 were produced from wood, and compression-molded products (carbonized-wood compression-molded products) CM1, CM3, and CM4 were produced from the carbonized wood WC1, and a compression-molded product (carbonized-wood compression-molded product) CM2 was produced from the carbonized wood WC2, and the envelope density and BET specific surface area of each of the compression-molded products were measured (see Table 2 below).

Production Method of Carbonized Wood WC1, WC2

After wood was crushed to a size of 30 mm or less, a temperature at which the crushed product was carbonized (pyrolyzed) by a rotary kiln was adjusted, thereby producing the carbonized wood WC1 and WC2 with different volatile contents. Specifically, the carbonization temperature (maximum temperature in the furnace) was set at 700 degrees C and the carbonization time was one hour.

Production Method of Compression-Molded Products CM1, CM2, CM3, CM4

Next, the carbonized wood WC1 was crushed to a size of 5 mm or less, and then water of 0.4 L/kg relative to a crushed product and the binder were added to this crushed product, which was then mixed and kneaded in a twin-screw extruder while being heated to 80 degrees C. This mixture was extruded and molded by a ring die extrusion molding machine to produce compression-molded products (pellets) CM1, CM3, and CM4 in cylindrical shapes (8 mm or 20 mm in diameter and 10 mm to 30 mm in length). The compression-molded products CM1, CM3, and CM4 were produced to have different envelope densities by changing the processing volume and die conditions (e.g., die diameter and length, extrusion pressure). Similarly, the carbonized wood WC2 was crushed to a size of 5 mm or less, and then water of 0.4 L/kg relative to a crushed product and the binder were added to this crushed product, which was then mixed and kneaded. This mixture was extruded and molded to produce a compression-molded product (pellets) CM2 in a cylindrical shape (20 mm in diameter and 10 mm to 30 mm in length). Cornstarch (added amount: 8 mass%) was used as the binder in the production of the compression-molded products CM1, CM2, CM3, and CM4. This added amount refers to a blending ratio (not included in total mass) provided that the carbonized wood is taken as 100 mass%.

Measurement

Industrial and elemental analyses were performed on each of the above-described carbonized wood WC1 and WC2 and the compression-molded products CM1, CM2, CM3, and CM4, and the envelope density and BET specific surface area were also measured. Moreover, industrial and elemental analyses were performed on the coke breeze used for producing sintered ore, and the envelope density and BET specific surface area were also measured.

Industrial Analysis and Elemental Analysis

In the industrial analysis, an ash content, volatile content, and fixed carbon content [mass%-dry] were determined in accordance with JIS M8812: 2006. In the elemental analysis, carbon (C), hydrogen (H), nitrogen (N), and total sulfur (T(Total)-S) content [mass%-dry] were measured in accordance with JIS M8813: 2004.

Method for Measuring Envelope Density

Envelope densities of the respective carbonized wood WC1 and WC2, compression-molded products CM1, CM2, CM3, and CM4, and coke breeze were measured using a commercially available density measuring device (GeoPyc1365 manufactured by Micromeritics). For the carbonized wood WC1 and WC2 used as the measurement samples, the particle size was adjusted by sieving to be within the range of 3 mm or more and less than 5 mm. For the compression-molded products CM1, CM2, CM3, and CM4 used as the measurement samples, the size after molding of the compression-molded products CM3 and CM4 had a diameter of 8 mm and a length of 10 mm or more and 30 mm or less, and the size after molding of compression-molded products CM1 and CM2 had a diameter of 20 mm and a length of 10 mm or more and 30 mm or less. The coke breeze used as the measurement sample had a particle size distribution as described below (Table 5 below). All the measurement samples were dried (heated at 105 degrees C for 24 hours) in advance using a dryer (Inert Oven DN611I manufactured by Yamato Scientific co., ltd.).

The envelope density was measured using the above-described bead volume replacement method. After placing the measurement samples in a layer of DryFlo (pseudo-fluid) and measuring a volume of each measurement sample including pores and cavities (envelope volume), the envelope density was calculated from the envelope volume and the mass of each measurement sample.

Measurement Method of BET Specific Surface Area

The BET specific surface areas of the carbonized wood WC1 and WC2, compression-molded products CM1, CM2, CM3, CM4, and coke breeze were measured using each of a gas adsorption method with $N_2$ gas and a gas adsorption method with $CO_2$ gas.

In the gas adsorption method using $N_2$ gas, as a pre-processing, a sample pre-processing device (VacPrep061 manufactured by Micromeritics) was used to heat the carbonized wood WC1 and WC2, the compression-molded products CM1, CM2, CM3, and CM4, and coke breeze at 150 degrees C for four hours with vacuum evacuation, thereby preparing measurement samples with a particle size from 0.25 mm to 0.5 mm. Next, using a constant volume adsorption measurement device (TriStar II manufactured by Micromeritics), an adsorbed amount Q of $N_2$ gas (adsorbed gas) was measured in a range where a relative pressure (a ratio $P/P_0$ of a measured pressure P to a saturated vapor pressure $P_0$) was from 0.02 to 0.1 (in increments of 0.01) by adsorbing $N_2$ gas onto the prepared measurement sample at -196 degrees C (by liquid nitrogen cooling). Based on this adsorption amount Q, the BET specific surface area was calculated as described below.

In the gas adsorption method using $CO_2$ gas, as a pre-processing, a sample pre-processing device (VacPrep061 manufactured by Micromeritics) was used to heat the carbonized wood WC1 and WC2, the compression-molded products CM1, CM2, CM3, and CM4, and coke breeze at 150 degrees C for four hours with vacuum evacuation, thereby preparing measurement samples with a particle size from 0.25 mm to 0.5 mm. Next, using a constant volume adsorption measurement device (TriStar II manufactured by Micromeritics), an adsorbed amount Q of $CO_2$ gas (adsorbed gas) was measured in a range where a relative pressure (a ratio $P/P_0$ of a measured pressure P to a saturated vapor pressure $P_0$) was from 0.012 to 0.030 (in increments of 0.002) by adsorbing $CO_2$ gas onto each of the prepared measurement sample at 0 degree C (by ice water cooling). Based on this adsorption amount Q, the BET specific surface area was calculated as described below.

A BET specific surface area S [$m^2$/g] was calculated using formulae (1) and (2) below in accordance with JIS Z8830:2013.

[Numerical Formula 1]

$$\frac{P}{Q(P_0 - P)} = \frac{1}{Q_m C} + \left(\frac{C-1}{Q_m C}\right)\left(\frac{P}{P_0}\right) \cdots (1)$$

[Numerical Formula 2]

$$S = s \times Q_{\mathrm{m}} \times K_{\mathrm{A}} \dots (2)$$

In the above formula (1), P represents the measured pressure [Pa], $P_0$ represents the saturated vapor pressure [Pa] of the adsorbed gas ($N_2$ or $CO_2$ gas), and "P/P$_0$" represents the relative pressure of the adsorbed gas [-]. Q represents the amount of adsorbed gas [mol/g] measured by the gas adsorption method described above, $Q_{\mathrm{m}}$ represents the monolayer adsorption capacity [mol/g], and C represents the BET parameter [-].

In the above formula (2), S represents the BET specific surface area [m$^2$/g], s represents the molecular cross sectional area [m$^2$], $Q_{\mathrm{m}}$ represents the monolayer adsorption capacity [mol/g], and $K_{\mathrm{A}}$ represents the Avogadro number [mol$^{-1}$].

Measurement Results

Table 2 below shows measurement results of industrial and elemental analyses, the envelope density, and BET specific surface area on each of the carbonized wood WC1 and WC2, the compression-molded products CM1, CM2, CM3, and CM4, and coke breeze.

Table 2

| | | Aggregation material | | | | | | Second sintering carbonaceous material |
| | | First sintering carbonaceous material | | | | | | |
| | | Carbonized wood WC1 | Carbonized wood WC2 | Compression-molded product CM1 | Compression-molded product CM2 | Compression-molded product CM3 | Compression-molded product CM4 | Coke breeze |
|---|---|---|---|---|---|---|---|---|
| Industrial analysis [mass% - dry] | Ash content | 5.1 | 3.1 | 2.1 | 2.6 | 3.0 | 3.7 | 12.7 |
| | Volatile content | 3.9 | 14.5 | 11.4 | 19.7 | 11.3 | 10.0 | 0.9 |
| | Fixed carbon | 91.0 | 82.4 | 86.5 | 77.7 | 85.7 | 86.3 | 86.4 |
| Elemental analysis [mass% - dry] | C | 90.2 | 88.4 | 89.0 | 80.6 | 86.3 | 88.3 | 85.2 |
| | H | 0.90 | 2.26 | 1.75 | 3.24 | 1.48 | 1.36 | 0.14 |
| | N | 0.62 | 0.54 | 0.62 | 0.43 | 0.61 | 0.74 | 1.14 |
| | T-S | 0.01 | 0.01 | 0.01 | 0.01 | 0.02 | 0.02 | 0.57 |
| Pellet diameter (mm) | | - | - | 20 | 20 | 8 | 8 | - |
| Envelope density [g/cm$^3$] | | 0.21 | 0.25 | 0.82 | 0.90 | 0.62 | 0.55 | 1.32 |
| BET specific surface area [m$^2$/g] | Gas adsorption method ($N_2$) | 332.9 | 93.7 | 0.9 | 18.7 | 39.5 | 202.8 | 11.8 |
| | Gas adsorption method ($CO_2$) | 433.3 | 327.5 | 367.6 | 293.5 | 386.6 | 403.9 | 14.9 |

Volatile Content

In the above Table 1, the volatile contents (11.4, 11.3, 10.0 mass%) of the respective compression-molded products CM1, CM3, and CM4 are higher than the volatile content (3.9 mass%) of the carbonized wood WC1, but this difference in volatile content is due to the volatile content of the binder (corn starch) used when molding the crushed carbonized wood WC1. The volatile content (19.7 mass%) of the compression-molded products CM2 is higher than the volatile content (14.5 mass%) of the carbonized wood WC2, but this difference in volatile content is due to the volatile content of the binder (corn starch) used when molding the crushed carbonized wood WC2.

Envelope Density and BET Specific Surface Area

The envelope densities (0.82, 0.62, 0.55 g/cm$^3$) of the respective compression-molded products CM1, CM3, and CM4 were significantly higher than that of the carbonized wood WC1 (0.21 g/cm$^3$). It is considered that extrusion molding for producing the compression-molded products CM1, CM3, and CM4 compressed the carbonized wood WC1, causing a reduction in the number and the size of pores in the carbonized wood WC1. The BET specific surface areas of the respective compression-molded products CM1, CM3, and CM4 were lower than that of the carbonized wood WC1, especially, greatly lower than that of the carbonized wood WC1 in the gas adsorption method ($N_2$).
Similarly, the envelope density of the compression-molded product CM2 (0.90 g/cm$^3$) was significantly higher than that of the carbonized wood WC2 (0.25 g/cm$^3$). It is considered that the compression-molded product CM2 was produced by extrusion molding, which compressed the carbonized wood WC2, causing a reduction in the number of pores and a reduction in the size of the pores in the carbonized wood WC2. The BET specific surface area of the compression-molded product CM2 was lower than that of the carbonized wood WC2, especially, greatly lower than that of the carbonized wood WC2 in the gas adsorption method ($N_2$).
The reason why the decrease in the BET specific surface area by the gas adsorption method ($N_2$) was greater than the decrease in the BET specific surface area by the gas adsorption method ($O_2$) is probably that since large pores (mesopores to macropores excluding micropores) were adsorbed by the gas adsorption method ($N_2$), the large pores generated by compression molding were mainly reduced.

Example 2

Test Level

In Example 2, sintering tests (four tests) were conducted using the carbonized wood WC1 and WC2, compression-molded products CM1, CM2, CM3, and CM4, and coke breeze shown in Example 1 as the aggregation materials, and a flame front speed, a finished product yield, and a production rate were evaluated. Example 2 shows test examples in which only coke breeze was used as the second sintering carbonaceous material, but it is also possible to use only anthracite or both (mixture) of anthracite and coke breeze as the second sintering carbonaceous material. Similar test results were obtained in the test examples using only anthracite or the mixture.

Sintering Test

Each sintering test was verified using a method commonly referred to as a sintering pot test. The sintering pot test involves placing a blended material containing the aggregation materials in a container (sintering pot) of a predetermined size, igniting the upper surface of the blended materials, and then performing the downward suction to promote sintering. The sintering pot test does not involve the movement of the material packed bed using pallets as in a Dwight-Lloyd (DL) type sintering machine, but the sintering pot test can simulate sintering performed using the DL-type sintering machine. First, the materials and methods for the tests will be described in turn, and then the test results will be described.

Sintering Materials

Table 3 shows the blending ratios [mass%] (excluding the aggregation materials) of the sintering materials used in the sintering tests.

Table 3

| Sintering material | New Material | | | | | | | | | | Returned ore | Aggregation material |
| | Iron ore (brand) | | | | | | Flux | | | Sub total | (not-inclusive) | (not-inclusive) |
| | A | B | C | D | E | F | Limestone | Quicklime | Serpentine | | | |
| Blending ratio [mass%] | 11.8 | 24.5 | 10.6 | 17.1 | 7.2 | 11.3 | 14.0 | 1.0 | 2.5 | 100.0 | 15.0 | See (*) row in Table 4 |

As shown in Table 3, the proportions of the new materials (iron ore A to F, limestone, quicklime, and serpentine) and the returened ore were kept constant for all test cases. Iron ore A to F are of different brands (origins). As flux, limestone, quicklime, and serpentine (MgO source) were used. The blending ratio of the returned ore was set at 15.0 mass% (not included in total mass), with the new materials set at 100 mass%.

Table 4 shows the test conditions for the aggregation materials (e.g., the type and blending ratio [mass%] of the aggregation materials) of the blended material used in the sintering tests. As shown in the upper part of Table 4, the following materials were used as the aggregation materials: the carbonized wood WC1 and coke breeze in Comparative 1; the carbonized wood WC2 and coke breeze in Comparative 2; the compression-molded product CM4 and coke breeze in Comparative 3; the compression-molded product CM1 and coke breeze in Examples 1 and 4 to 6; the compression-molded product CM2 and coke breeze in Example 2; and the compression-molded product CM3 and coke breeze in Example 3. In the following description, as shown in Table 4, the compression-molded products CM1, CM2, CM3, and CM4, and the carbonized wood WC1 and WC2 are also referred to as the first sintering carbonaceous materials, and the coke breeze is also referred to as the second sintering carbonaceous material.

The blending ratios of the aggregation materials (first sintering carbonaceous material and second sintering carbonaceous material) in each test example (Examples 1 to 6 and Comparatives 1 to 3 described above) were determined based on the fixed carbon content of the blending standard (a case where the blending ratio of coke breeze to 100 mass% of the new materials was 4.5 mass% (not included in total mass). Specifically, based on the fixed carbon content mass ratio of each of the first and second sintering carbonaceous materials ("Mass ratio of the fixed carbon content " in Table 4) and the fixed carbon in each of the first and second sintering carbonaceous materials ("Fixed carbon" in the industrial analysis in the upper part of Table 2), the fixed carbon content (carbon content) of all aggregation materials (first and second sintering carbonaceous materials) in the blended material was adjusted to be constant (the same as the fixed carbon content of the blending standard) in all test cases. The blending ratio of each aggregation material (first and second sintering carbonaceous material) to the new materials is shown in Table 4, "(*) Blending ratio of aggregation materials to new materials.

Table 4

| | | Blending standard | Comparative 1 | Comparative 2 | Comparative 3 | Example 1 | Example 2 | Example 3 | Example 4 | Example 5 | Example 6 |
|---|---|---|---|---|---|---|---|---|---|---|---|
| Aggregation material | First sintering carbonaceous material | - | Carbonized wood WC1 | Carbonized wood WC2 | Compression-molded product CM4 | Compression-molded product CM1 | Compression-molded product CM2 | Compression-molded product CM3 | Compression-molded product CM1 | Compression-molded product CM1 | Compression-molded product CM1 |
| | Second sintering carbonaceous material | Coke breeze | Coke breeze | Coke breeze | Coke breeze | Coke breeze | Coke breeze | Coke breeze | Coke breeze | Coke breeze | Coke breeze |
| Mass ratio of fixed carbon content [mass%] (Carbon equivalent blending ratio) | First sintering carbonaceous material | 0 | 50 | 30 | 50 | 50 | 30 | 50 | 50 | 50 | 50 |
| | Second sintering carbonaceous material | 100 | 50 | 70 | 50 | 50 | 70 | 50 | 50 | 50 | 50 |
| (') Blending ratio of aggregation material to new material [mass%] (not-inclusive) | First sintering carbonaceous material | 0.00 | 2.14 | 1.42 | 2.25 | 2.20 | 1.50 | 2.27 | 2.20 | 2.20 | 2.20 |
| | Second sintering carbonaceous malarial | 4.50 | 2.25 | 3.15 | 2.25 | 2.25 | 3.15 | 2.25 | 2.25 | 2.25 | 2.25 |
| | Total | 4.50 | 4.39 | 4.57 | 4.50 | 4.45 | 4.65 | 4.52 | 4.45 | 4.45 | 4.45 |
| Particle size of aggregation material | First sintering carbonaceous material | - | Table 5 | Table 5 | Table 5 | Table 5 | Table 5 | Table 5 | Table 6 | Table 7 | Table 5 |
| | Second sintering carbonaceous material | - | Table 5 | Table 5 | Table 5 | Table 5 | Table 5 | Table 5 | Table 5 | Table 5 | Table 5 |
| Addition method of aggregation material | Post-addition /Pre-addition | - | Post-addition | Post-addition | Post-addition | Post-addition | Post-addition | Post-addition | Post-addition | Post-addition | Pre-addition |

20

The first sintering carbonaceous materials shown in Table 4 are, respectively, crushed products (crushed products of the carbonized wood WC1 and WC2 and crushed products of the carbonized-wood compression-molded products CM1, CM2, CM3, and CM4), which were obtained by crushing the carbonized wood WC1 and WC2 and the carbonized-wood compression-molded products CM1, CM2, CM3, and CM4 produced in Example 1 using Best Fine Breaker (produced by Ogawa Sampling Co., Ltd. / 5001-1A) and Fret Mill (produced by Ogawa Sampling Co., Ltd. / roll diameter 450 mm, pan diameter 910 mm, pan diameter: 910 mm, pan revolving speed: 13 rpm).

Each table number (Table 5, Table 6, or Table 7) shown in the cell of "Particle size of aggregation material" of Table 4 indicates the corresponding particle size distribution of each of the aggregation materials (first and second sintering carbonaceous materials) used in the tests. For the particle size categories shown in Tables 5 to 7, the existing ratio of each particle size is shown as the mass ratio [mass%], as in Table 1 above. A particle size category "+10.0" in Table 7 refers to sizes of particles retained on a sieve with a 10.0-mm mesh opening when sieved. Each of the aggregation materials (first and second sintering carbonaceous materials) was used as the sintering material after being sized with a sieve in accordance with JIS Z8801-1:2019 to have the corresponding particle size distribution indicated by the table number (Table 5, Table 6, or Table 7) in the cell of Table 4. As shown in Table 4, in Examples 4 and 5, the particle size distribution of the first sintering carbonaceous material (compression-molded product CM1) was changed to study the effect of particle size distribution. Specifically, Example 4 is a case (Table 6) where particles with a particle size of 4.76 mm or more ("10.0 to 4.76") and particles with a particle size of less than 0.25 mm ("-0.25") are excluded from the particle size distribution in Table 5, and Example 5 is a case (Table 7) where particles with a particle size of 10 mm or more not present in the particle size distribution in Table 5 ("+10.0) are slightly included. The particle size distributions in Table 5 and Table 6 correspond to "less than 10 mm and more than 0 mm" and "less than 4.76 mm and more than 0.25 mm," respectively, if the particle size distribution is represented by the particle size range.

Table 5

| Particle size (mm) | Particle size category | | | | | | Average particle size |
| --- | --- | --- | --- | --- | --- | --- | --- |
| | 10.0 to 4.76 | 4.76 to 2.8 | 2.8 to 1.0 | 1.0 to 0.5 | 0.5 to 0.25 | -0.25 | 1.8 [mm] |
| Ratio [mass%] | 3.0 | 22.0 | 27.0 | 27.0 | 8.0 | 13.0 | |

Table 6

| | Particle size category | | | | | |
| --- | --- | --- | --- | --- | --- | --- |
| Particle size (mm) | 10.0 to 4.76 | 4.76 to 2.8 | 2.8 to 1.0 | 1.0 to 0.5 | 0.5 to 0.25 | -0.25 |
| Ratio [mass%] | 0.0 | 26.2 | 32.1 | 32.1 | 9.5 | 0.0 |

Table 7

| | Particle size category | | | | | | |
| --- | --- | --- | --- | --- | --- | --- | --- |
| Particle size (mm) | +10.0 | 10.0 to 4.76 | 4.76 to 2.8 | 2.8 to 1.0 | 1.0 to 0.5 | 0.5 to 0.25 | -0.25 |
| Ratio [mass%] | 2.9 | 4.8 | 21.0 | 25.7 | 25.7 | 7.6 | 12.4 |

Granulation Method

A cylindrical batch-type drum mixer with a diameter of 1 m and a length of 0.4 m was used as a granulator. For the above-described tests (excluding Example 6), the aggregation materials (first sintering carbonaceous material and second sintering carbonaceous material) were added to the granulator during the granulation step. Specifically, all amounts of the sintering materials (iron ore A to F, limestone, quicklime, serpentine, and returned ore) excluding the aggregation materials (first sintering carbonaceous material and second sintering carbonaceous material) were put into a drum mixer (rotation speed 23 rpm) and mixed for one minute. Next, water was added to the drum mixer (to adjust the moisture content) so that the target moisture content was 7.5 mass% (not included in total mass) based on the mass of the whole sintering material (including the aggregation materials and returned ore), and the mixture was mixed for further 3 minutes and 30 seconds (granulation process), after which the drum mixer was temporarily stopped. Here, the aggregation materials (mixture of the first sintering carbonaceous material and second sintering carbonaceous material) were added to the drum mixer (post-addition), and then mixed (granulation process) for further 30 seconds. In addition, for a case using the compression-molded product CM1, a test was also conducted in which the aggregation materials (first sintering carbonaceous material and second sintering carbonaceous material) were fed into the drum mixer together with the sintering materials (pre-addition / Example 6). That is, in Example 6, all the sintering materials, including the aggregation materials, were charged into the drum mixer at the same time.

Sintering Method

The blended material (blended material granules) after the granulation process were charged into the sintering pot. The sintering pot used in this test was a cylindrical pot with a diameter of 300 mm and a height of 600 mm. After the blended material granules were charged in, an ignition device was used to ignite a surface of the material packed bed (a layer created by charging the blended material granules) for 90 seconds (calorific value 165 MJ/ ton of the blended material). In addition, a suction negative pressure during sintering was adjusted by an opening degree of a valve on a suction side of a blower so that the measured value under the pot was constant at 15.0 kPa (1530 mmH$_2$O).

Along with the pressure, the temperature was also measured using a thermocouple under the pot. In sintering, when a combustion zone reaches the bottom of the material packed bed, an exhaust gas temperature under the pot begins to rise, eventually reaching a peak, and then drops as the combustion of the aggregation materials in the material packed bed is completed. The downward suction by the blower was stopped three minutes after the exhaust gas temperature reached a peak (maximum temperature). The sintering time ts [min] (see formula (4) below) was defined as a time from a point of time when the ignition started to a point of time when the exhaust gas temperature peaked. From the sintering pot test described above, flame front speed (FFS), a finished product yield, and a production rate were calculated for each test case.

Flame Front Speed

Flame Front Speed (FFS) [mm/min] is a value obtained by dividing the layer thickness (thickness in a height direction of the sintering pot) of the material packed bed when the sintering pot is filled with the sintering materials by the time from the point of time when the ignition of the material packed bed was started to a point of time when the combustion zone reached the bottom of the material packed bed (reaching time point). In this Example, the reaching time point was defined as a point of time when the exhaust gas temperature reached the maximum temperature (BTP; Burn Through Point).

Finished Product Yield

The finished product yield is the mass ratio of the sintered ore product to the sinter cake (excluding bedding ore). In this Example, the sinter cake obtained after sintering was dropped five times from a height of 2 m. The sintered ore with a particle size of +5 mm (exceeding 5 mm), excluding bedding ore, was collected as a finished product and its mass was determined as a finished product mass. A value obtained by dividing the finished product mass by the sinter cake mass excluding bedding ore was defined as the finished product yield. Specifically, the finished product yield R [mass%] is calculated according to a formula (3) below. The finished product mass Ms is the mass of sintered ore retained on the sieve (finished product mass) using a sieve with a 5-mm aperture. The mass M$_t$ is the mass of the sinter cake excluding bedding ore.

[Numerical Formula 3]

$$R = \frac{Ms}{Mt} \times 100 \ ... \ (3)$$

Production Rate

The production rate is the production rate of sintered ore [t/d(day)/m$^2$]. In this Example, as represented by a formula (4) below, the production rate Pr [t/d/m$^2$] was calculated by dividing the above-described finished product mass Ms [t] by an effective sintering area (pot bottom area) S [m$^2$] and a sintering time ts [min].

[Numerical Formula 4]

$$Pr = \frac{Ms}{S \times ts} \times 60 \times 24 \ ... \ (4)$$

Test Results

Table 8 shows the results of the above-described sintering pot tests (flame front speed (FFS), finished product yield, and production rate).

Table 8

| | Type of aggregation material (carbon content mass ratio) | | Envelope density [g/cm$^3$] | FFS [mm/min] | Finished product yield [mass%] | Production rate [t/d/m$^2$] |
|---|---|---|---|---|---|---|
| Example 1 | First sintering carbonaceous material | Compression-molded product CM1 (50 mass%) | 0.82 | 26.5 | 73.5 | 33.8 |
| | Second sintering carbonaceous material | Coke breeze (50 mass%) | 1.32 | | | |
| Example 2 | First sintering carbonaceous material | Compression-molded product CM2 (30 mass%) | 0.90 | 26.4 | 73.9 | 34.8 |
| | Second sintering carbonaceous material | Coke breeze (70 mass%) | 1.32 | | | |
| Example 3 | First sintering carbonaceous material | Compression-molded product CM3 (50 mass%) | 0.62 | 27.0 | 72.1 | 33.0 |
| | Second sintering carbonaceous material | Coke breeze (50 mass%) | 1.32 | | | |
| Example 4 | First sintering carbonaceous material | Compression-molded product CM1 (50 mass%) | 0.82 | 26.7 | 74.1 | 34.5 |
| | Second sintering carbonaceous material | Coke breeze (50 mass%) | 1.32 | | | |
| Example 5 | First sintering carbonaceous material | Compression-molded product CM1 (50 mass%) | 0.82 | 26.9 | 71.9 | 32.1 |
| | Second sintering carbonaceous material | Coke breeze (50 mass%) | 1.32 | | | |
| Example 6 | First sintering carbonaceous material | Compression-molded product CM1 (50 mass%) | 0.82 | 26.0 | 73.5 | 33.2 |
| | Second sintering carbonaceous material | Coke breeze (50 mass%) | 1.32 | | | |
| Comp. 1 | First sintering carbonaceous material | Carbonized wood WC1 (50 mass%) | 0.21 | 32.7 | 52.5 | 28.2 |
| | Second sintering carbonaceous material | Coke breeze (50 mass%) | 1.32 | | | |

(continued)

| | Type of aggregation material (carbon content mass ratio) | | Envelope density [g/cm$^3$] | FFS [mm/min] | Finished product yield [mass%] | Production rate [t/d/m$^2$] |
|---|---|---|---|---|---|---|
| Comp. 2 | First sintering carbonaceous material | Carbonized wood WC2 (30 mass%) | 0.25 | 28.0 | 66.4 | 32.7 |
| | Second sintering carbonaceous material | Coke breeze (70 mass%) | 1.32 | | | |
| Comp. 3 | First sintering carbonaceous material | Compression-molded product CM4 (50 mass%) | 0.55 | 29.5 | 65.0 | 30.5 |
| | Second sintering carbonaceous material | Coke breeze (50 mass%) | 1.32 | | | |

As described above, in this Example, the first sintering carbonaceous materials (carbonized wood WC1, WC2, and compression-molded products CM1, CM2, CM3, and CM4) were crushed and sized. In all test examples except for Examples 4 and 5, the first and second sintering carbonaceous materials were used with the same particle size distribution (see Table 4). Since the envelope density of the first sintering carbonaceous material is almost unchanged before and after crushing, the envelope density before crushing in Table 2 is shown in the column of the envelope density in Table 8. As shown in Table 4 and Table 8 described above, in a case (Example 1) where sintered ore was produced using the compression-molded product CM1 (crushed product) as the first sintering carbonaceous material, the flame front speed (FFS) was suppressed and the finished product yield and the production rate improved compared to when sintered ore was produced using carbonized wood WC1 (crushed product) as the first sintering carbonaceous material (Comparative 1). Moreover, in a case (Example 2) where sintered ore was produced using the compression-molded product CM2 (crushed product) as the first sintering carbonaceous material, the flame front speed (FFS) was suppressed and the finished product yield and production rate improved compared to when sintered ore was produced using carbonized wood WC2 (crushed product) as the first sintering carbonaceous material (Comparative 2).

Moreover, also in cases (Examples 4 and 5) where sintered ore was produced using the compression-molded product CM1 (crushed product) with a different particle size distribution from that in Example 1 as the first sintering carbonaceous material, the flame front speed (FFS) was suppressed and the finished product yield and the production rate improved compared to when sintered ore was produced using the carbonized wood WC1 (crushed product) as the first sintering carbonaceous material (Comparative 1). Also in a case (Example 6) where sintered ore was produced using the compression-molded product CM1 (crushed product), which had undergone a typical granulation process (pre-addition) unlike in Example 1, as the first sintering carbonaceous material, the flame front speed (FFS) was suppressed and the finished product yield and the production rate improved compared to when sintered ore was produced using the carbonized wood WC1 (crushed product) as the first sintering carbonaceous material (Comparative 1).

In a case (Example 3) where sintered ore was produced using the compression-molded product CM3 (crushed product) with an envelope density of 0.62 g/cm$^3$ as the first sintering carbonaceous material, the flame front speed (FFS) was slightly higher and the finished product yield and the production rate were lower than in Example 1 (0.82 g/cm$^3$) and Example 2 (0.90 g/cm$^3$); however, the flame front speed (FFS) was suppressed and the finished product yield and the production rate were improved compared to a case (Comparative 1) where sintered ore was produced using the carbonized wood WC1 (crushed product) as the first sintering carbonaceous material. In a case (Comparative 3) where sintered ore was produced using the compression-molded product CM4 (crushed product) with an envelope density of 0.55 g/cm$^3$ as the first sintering carbonaceous material, the flame front speed (FFS) was suppressed compared to Comparative 1, however, not sufficient compared to Example 1, resulting in an insufficient improvement in the finished product yield and the production rate.

Although the preferred exemplary embodiments and Examples of the invention are described in detail above with reference to the accompanying drawings, the invention is not limited thereto. It is clear that a person with ordinary knowledge in the technical field to which the invention pertains can reach various modified or altered examples within the scope of the technical ideas recited in Claims, and it is understood that those also naturally fall within the technical scope of the invention.

EXPLANATION OF CODES

1, 1a, 1c, 1d: material tank group, 2: mixer granulator, 3: DL-type sintering machine, 4: ignition furnace, 5: pallet traveling direction, 6: downward suction, 7: mixer, 10: material packed bed, 10A: combustion zone, 10x: slope, 11: sinter cake, 20: gradient plate chute-type charging device, 21: blended material surge hopper, 22: gradient plate chute, 100, 101, 102: sintering equipment, S111, S121, S131: stage for obtaining carbonized-wood compression-molded product, S112, S122, S132, S212, S222, S232: crushing step, S123, S223: sizing step (selection step), S133, S233: classification step(selection step), S200: production step of carbonized-wood compression-molded product, S201: wood-obtaining stage, S202: carbonization step, S203: compression step

**Claims**

1. A method for producing sintered ore using sintering materials, the sintering materials comprising: a crushed product of a compression-molded product obtained by crushing the compression-molded product obtained by compressing and molding an aggregate of carbonized wood; and at least one of coke breeze or anthracite, wherein the compression-molded product has an envelope density of 0.6 g/cm$^3$ or more.

2. The method for producing sintered ore according to claim 1, wherein the crushed product of the compression-molded product and at least one of the coke breeze or the anthracite, of the sintering materials, are added in a latter half of granulation.

3. The method for producing sintered ore according to claim 1 or 2, wherein the crushed product of the compression-molded product obtained by the crushing further undergoes, after the crushing, selecting a crushed product having a particle size falling within a predetermined particle size range as the sintering material.

4. The method for producing sintered ore according to claim 3, wherein the predetermined particle size range is more than 0 mm and less than 10 mm.

5. The method for producing sintered ore according to claim 1 or 2, wherein the compression-molded product has a volatile content of 20 mass% or less.

6. The method for producing sintered ore according to claim 1 or 2, wherein producing the compression-molded product includes:

   carbonizing a wood material to produce the carbonized wood; and compressing and molding an aggregate of the carbonized wood using a binder to produce the compression-molded product, and the carbonized wood has a volatile content of 15 mass% or less.

7. The method for producing sintered ore according to claim 3, wherein the selecting further includes: selecting a crushed product having a particle size larger than an upper limit value of the predetermined particle size range; and reusing the selected crushed product as a material for the crushed product of the compression-molded product in the crushing.

8. The method for producing sintered ore according to claim 6, wherein the crushed product of the compression-molded product obtained by the crushing further undergoes, after the crushing, selecting a crushed product having a particle size falling within a predetermined particle size range as the sintering materials; and the selecting further includes: selecting a crushed product having a particle size smaller than a lower limit value of the predetermined particle size range; and reusing the selected crushed product as a material for the compression-molded product in the compressing.

EP 4 628 605 A1

# FIG.2

EP 4 628 605 A1

# FIG.3

```
┌─────────────────────┐        ┌─────────────────┐
│ STAGE FOR OBTAINING │        │                 │
│   CARBONIZED-WOOD    │──────▶│ CRUSHING STEP   │──────▶ TO MATERIAL TANK
│ COMPRESSION-MOLDED   │        │                 │
│      PRODUCT         │        └─────────────────┘
└─────────────────────┘               S112
         S111
```

# F I G . 4

```
┌─────────────────────┐     ┌──────────────────┐     ┌──────────────────┐
│ STAGE FOR OBTAINING │     │                  │     │                  │      → TO MATERIAL
│  CARBONIZED-WOOD    │ →   │  CRUSHING STEP   │ →   │   SIZING STEP    │ ────→   TANK
│ COMPRESSION-MOLDED  │     │                  │     │                  │
│      PRODUCT        │     │                  │     │                  │      → COLLECT
└─────────────────────┘     └──────────────────┘     └──────────────────┘
        S121                      S122                      S123
```

# FIG.5

```
┌──────────────────────┐      ┌──────────────────┐     ┌──────────────────┐
│ STAGE FOR OBTAINING  │      │                  │     │  CLASSIFICATION  │
│  CARBONIZED-WOOD     │─────▶│  CRUSHING STEP   │────▶│      STEP        │────▶ TO MATERIAL
│ COMPRESSION-MOLDED   │      │                  │     │                  │        TANK
│     PRODUCT          │      └──────────────────┘     └──────────────────┘
└──────────────────────┘                                                    └──▶ COLLECT
            S131                         S132                    S133
```

# FIG.6

```
┌─────────────────────┐        ┌──────────────┐
│  PRODUCTION STEP OF │        │              │
│   CARBONIZED-WOOD   │───────▶│ CRUSHING STEP│───▶ TO MATERIAL TANK
│ COMPRESSION-MOLDED  │        │              │
│      PRODUCT        │        └──────────────┘
└─────────────────────┘              │
          │                         S212
        S200
```

# FIG.7

```
┌──────────────────────┐      ┌──────────────────┐      ┌──────────────────┐        TO MATERIAL
│  PRODUCTION STEP OF   │      │                  │      │                  │────────► TANK
│   CARBONIZED-WOOD     │─────►│  CRUSHING STEP   │─────►│   SIZING STEP    │
│ COMPRESSION-MOLDED    │      │                  │      │                  │────────► COLLECT
│      PRODUCT          │      └──────────────────┘      └──────────────────┘
└──────────────────────┘              S222                     S223
         S200
```

# FIG.8

PRODUCTION STEP OF
CARBONIZED-WOOD
COMPRESSION-MOLDED
PRODUCT

S200

CRUSHING STEP

S232

CLASSIFICATION
STEP

S233

TO MATERIAL
TANK

COLLECT

# FIG.9

EP 4 628 605 A1

S200

| WOOD-OBTAINING STAGE | → | CARBONIZATION STEP | → | COMPRESSION STEP | → (TO S212, S222 OR S232) |

S201          S202          S203

# FIG.10

```
┌──────────────┐   ┌──────────────┐   ┌──────────────┐   ┌──────────────┐   ┌──────────────┐
│WOOD-OBTAINING│ → │ CARBONIZATION│ → │ COMPRESSION  │ → │CRUSHING STEP │ → │CLASSIFICATION│ → TO MATERIAL
│    STAGE     │   │     STEP     │   │     STEP     │   │              │   │     STEP     │     TANK
└──────────────┘   └──────────────┘   └──────────────┘   └──────────────┘   └──────────────┘
      S201               S202               S203               S232               S233
```

EP 4 628 605 A1

# FIG.11

## INTERNATIONAL SEARCH REPORT

| International application No. |
|---|
| **PCT/JP2023/037317** |

| A. | CLASSIFICATION OF SUBJECT MATTER |
|---|---|

*C22B 1/16*(2006.01)i; *C10L 5/44*(2006.01)i
FI:   C22B1/16 E; C22B1/16 K; C22B1/16 N; C22B1/16 R; C10L5/44

According to International Patent Classification (IPC) or to both national classification and IPC

| B. | FIELDS SEARCHED |
|---|---|

Minimum documentation searched (classification system followed by classification symbols)

C22B1/16; C10L5/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 102260567 A (CENTRAL SOUTH UNIVERSITY) 30 November 2011 (2011-11-30) | 1 |
|  | claims 1-3, 5, 7-10, examples, paragraphs [0004], [0007], [0022], [0027], [0028] |  |
| Y | claims 1-3, 5, 7-10, examples, paragraphs [0004], [0007], [0022], [0027], [0028] | 1-7 |
| A |  | 8 |
| Y | JP 2020-056086 A (NIPPON STEEL CORP.) 09 April 2020 (2020-04-09) | 2-7 |
|  | paragraphs [0016], [0035], [0036] |  |
| A |  | 8 |
| Y | JP 2018-003081 A (JFE STEEL CORP.) 11 January 2018 (2018-01-11) | 2-7 |
|  | claim 1, paragraph [0017] |  |
| A |  | 8 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 December 2023** | **19 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** |  |
|  | Telephone No. |

Form PCT/ISA/210 (second sheet) (January 2015)

**INTERNATIONAL SEARCH REPORT**
Information on patent family members

International application No.

**PCT/JP2023/037317**

| Patent document cited in search report | | | Publication date (day/month/year) | Patent family member(s) | Publication date (day/month/year) |
|---|---|---|---|---|---|
| CN | 102260567 | A | 30 November 2011 | (Family: none) | |
| JP | 2020-056086 | A | 09 April 2020 | (Family: none) | |
| JP | 2018-003081 | A | 11 January 2018 | WO 2018/003648 A1 claim 1, paragraph [0017] | |

Form PCT/ISA/210 (patent family annex) (January 2015)

**EP 4 628 605 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003328044 A

- JP 2013237876 A